(19) Europäisches Patentamt
European Patent Office
Office européen des brevets

(11) **EP 2 103 962 B1**

(12) **EUROPÄISCHE PATENTSCHRIFT**

(45) Veröffentlichungstag und Bekanntmachung des Hinweises auf die Patenterteilung:
**17.08.2011  Patentblatt 2011/33**

(51) Int Cl.:
*G01V 8/20* *(2006.01)*

(21) Anmeldenummer: **09003312.7**

(22) Anmeldetag: **06.03.2009**

(54) **Optoelektronischer Sensor**

Optoelectronic sensor

Capteur optoélectronique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.03.2008  DE 102008015286**

(43) Veröffentlichungstag der Anmeldung:
**23.09.2009  Patentblatt 2009/39**

(73) Patentinhaber: **SICK AG**
**79183 Waldkirch/Breisgau (DE)**

(72) Erfinder:
• **Kohler, Markus**
**79312 Emmendingen (DE)**
• **Szerbakowski, Boris**
**79183 Waldkirch (DE)**

• **Schmitz, Stephan, Dr.**
**79108 Freiburg (DE)**

(74) Vertreter: **Finsterwald, Martin**
**Manitz, Finsterwald & Partner GbR**
**Postfach 31 02 20**
**80102 München (DE)**

(56) Entgegenhaltungen:
EP-A- 1 202 483        EP-A- 2 015 110
DE-A1- 3 119 876       DE-A1- 10 046 136
US-A1- 2006 017 545    US-B1- 6 211 807

• M.KAVEHRAD: "Optical Code-Division-Multiplexed Systems Based on Spectral Encoding of Noncoherent Sources" JOURNAL OF LIGHTWAVE TECHNOLOGY, Bd. 13, Nr. 3, März 1995 (1995-03), Seiten 534-545, XP000857081 ISSN: 0018-9219

EP 2 103 962 B1

**Beschreibung**

Die Erfindung betrifft einen optoelektronischen Sensor mit mehreren Lichtsendern zur Aussendung von Lichtsignalen in einen Überwachungsbereich, wenigstens einem Lichtempfänger zum Empfang von von den Lichtsendern ausgesandten Lichtsignalen und einer Steuer- und/oder Auswerteeinrichtung zur Erzeugung und/oder Beeinflussung der Lichtsignale und zur Erzeugung eines Objektfeststellungssignals im Falle des Vorhandenseins eines Objektes im Überwachungsbereich in Abhängigkeit von den Ausgangssignalen des Lichtempfängers. Ein Sensor dieser Art ist in der DE 100 46 136 A1 beschrieben.

Derartige Sensoren können insbesondere als mehrstrahlige Lichtgittersysteme zur Zugangsüberwachung eingesetzt werden, wobei insbesondere gefährliche Maschinenarbeitsbereiche oder bestimmte Räume innerhalb eines Gebäudes abgesichert werden sollen.

Wenn bei Sensoren der genannten Art ein Objekt in den Überwachungsbereich gelangt und dadurch der Lichtweg zwischen Lichtsender und Lichtempfänger unterbrochen wird, wird ein Objektfeststellungssignal generiert, das beispielsweise zum Abschalten einer Maschine und/oder zur Auslösung eines akustischen oder optischen Warnsignals führen kann.

Bei den derzeit üblichen Lichtgittern wird ein Lichtpuls oder eine Lichtpulsfolge ausgesandt der bzw. die mittels eines Schwellwertdetektors nachgewiesen wird bzw. werden. Die jeweiligen Lichtpulse können nun aber durch Störsignale überlagert sein, was die Detektion der empfangenen Pulse bzw. Pulsfolgen zumindest erschwert. In der DE 199 26 214 A1 wird zur Unterdrückung von Störsignalen vorgeschlagen, sogenannte gut korrelierende Chirps-Folgen als Sendesignale zu verwenden. Dabei werden die Nutzsignale einer spektralen Spreizung unterzogen, um sie gegen Schmalband- oder Impulsstörungen unempfindlich zu machen.

Aus der Mobilfunktechnik ist die Anwendung von sogenannten Spread-Spektrum-Techniken bekannt. Dabei kann beispielsweise ein Pseudozufallsrauschcode über ein sogenanntes primitives Polynom erzeugt sein, wobei ein solcher Pseudozufallsrauschcode beispielsweise eine M-Sequenz umfassen kann.

Es ist nun denkbar, beispielsweise verschiedene M-Sequenzen zu erzeugen, um unterscheidbare orthogonale Übertragungssignale zu erzeugen und damit sicherzustellen, dass sich benachbarte Lichtgitter nicht stören. Werden dabei für die Lichtgitter aus dem Bereich der Mobilfunktechnik bekannte Spread-Spektrum-Techniken unter Anwendung eines sogenannten CDMA-Verfahrens (CDMA = Code Division Multiple Access) angewandt, so können prinzipiell Kasami-Folgen, Gold-Codes, M-Sequenzen, Barker-Codes, ein Hadamart-Walsh-Code oder eine Kombination dieser Codes als Pulsfolgen benutzt werden.

Die Orthogonalität nimmt zwar mit zunehmender Länge der Pulsfolgen zu. Da es bei Lichtgittern nun aber auf eine schnelle Ansprechzeit ankommt, ist es nicht möglich, beliebig lange Pulsfolgen einzusetzen. Die Pulsfolgen sind in der Praxis vielmehr auf eine Länge von beispielsweise $2^N$-1 Chips begrenzt, wobei N beispielsweise im Bereich von 5 bis 8 liegen kann. Es besteht daher die Gefahr, dass sich die einzelnen Strahlen eines Lichtgitters stören.

Bei dem aus der DE 100 46 136 A1 beschriebenen optoelektronischen Sensor werden die Lichtsignale der verschiedenen Lichtsender nacheinander in den Überwachungsbereich ausgesandt, wobei die Lichtsender nacheinander mit den verschiedenen Bits eines bestimmten Datenmusters beaufschlagt werden. Dabei erfolgt mit dem betreffenden Datenmuster eine Codierung des Sensors als Ganzes, um ein Ausfsynchronisieren auf einen Nachbarsensor zu vermeiden.

In dem Aufsatz M: KAVEHRAD: "Optical Code-Division-Multiplexed Systems Based on Spectral Encoding of Noncoherent Sources" JOURNAL OF LIGHTWAVE TECHNOLOGY, Bd. 13, Nr. 3, März 1995 (1995-03), Seiten 534-545, XP000509320 ISSN: 0018-9219, ist ein optisches CDMA-Breitband-Übertragungssystem für eine asynchrone Übertragung von Daten beschrieben.

Bei einem anderen, in der US 2006/0017545 A1 beschriebenen Kommunikationssystem wird zur Korrelation eines Empfängers unter Verwendung von Sequenzen aus orthogonalen Codes ein RFID-Antwortcode erzeugt.

Der Erfindung liegt die Aufgabe zugrunde, einen verbesserten optoelektronischen Sensor der eingangs genannten Art zu schaffen, der bei möglichst einfachem Aufbau und möglichst großer Reichweite einen optimalen Störabstand der einzelnen Strahlen eines Lichtgitters gewährleistet.

Erfindungsgemäß wird diese Aufgabe dadurch gelöst, dass wenigstens zwei Lichtsender vorgesehen sind, deren simultan in den Überwachungsbereich ausgesandte Lichtsignale jeweils durch ein nach dem Bandspreizverfahren mit einem Code moduliertes Ausgangssignal erzeugt sind, wobei die Codes verschiedener Lichtsender durch quasi-orthogonale Hadamard-Walsh-Codes erzeugt sind oder einem ersten Lichtsender ein erster Code in Form eines eine M-Sequenz, Gold-Sequenz oder Kasami-Sequenz umfassenden Pseudozufallscodes zugeordnet ist, der eine in mehrere Code-Segmente aufgeteilte Mutter-Sequenz bildet, und wenigstens einem weiteren Lichtsender ein sich zumindest vom ersten Code unterscheidender weiterer Code zugeordnet ist, der durch eine zyklische Verschiebung der Code-Segmente der Mutter-Sequenz erzeugt ist, wobei die den verschiedenen Lichtsendern zugeordneten unterschiedlichen Codes wieder quasi-orthogonale Codes bilden.

Die simultan ausgesandten Codes sind also auf bestimmte einfache Weise so gewählt und werden so ausgewertet, dass sie zumindest im Wesentlichen keinen Einfluss aufeinander ausüben. Die die Codes bildenden Sequenzen oder Folgen können auch bei einer Verschiebung relativ zueinander noch eindeutig identifiziert werden. Damit wird nun vor allem auch erreicht, dass die einzelnen Strahlen eines betreffenden Lichtgitters sich zumindest im Wesentlichen nicht mehr stören, d.h. die Funktionsfähigkeit des Sensors im wesentlichen gewährleistet ist.

Die Steuer- und/oder Auswerteeinrichtung kann beispielsweise so ausgeführt sein, dass bei n simultan gesendeten Codes empfangsseitig n verschiedene Korrelationsspektren ausgewertet werden.

Dabei ist die Steuer- und/oder Auswerteeinrichtung vorteilhafterweise so ausgeführt, dass die n verschiedenen Korrelationsspektren über die Positionen der einzelnen Korrelationspeaks verknüpft ausgewertet werden.

Von Vorteil ist insbesondere, wenn die Steuer- und/oder Auswerteeinrichtung so ausgeführt ist, dass bei simultan ausgesandten zyklisch verschobenen M-Sequenzen, Gold-Sequenzen bzw. Kasami-Sequenzen empfangsseitig sämtliche Codes mit lediglich einem Auswertevorgang identifizierbar sind. Die Auswertung kann also insbesondere mittels eines einzigen Korrelationsvorgangs mit nur einem Korrelationsspektrum durchgeführt werden. Es soll also insbesondere gewährleistet sein, dass empfangsseitig sämtliche Codes mit lediglich einem Sensor erfasst und/oder gesampelt werden und so die Auswertungen der einzelnen Codes verknüpft werden können.

Bei simultan ausgesandten zyklisch verschobenen M-Sequenzen, Gold-Sequenzen bzw. Kasami-Sequenzen kann die quasi-orthogonale Eigenschaft der unterschiedlichen Codes insbesondere auf den Autokorrelationseigenschaften der M-Sequenzen, Gold-Sequenzen bzw. Kasami-Sequenzen basieren.

Bevorzugt ist die Mutter-Sequenz in zumindest zwei, insbesondere in zumindest drei und vorzugsweise in zwei bzw. drei bis sechs Code-Segmente aufgeteilt.

Durch die zyklische Verschiebung der Code-Segmente der Mutter-Sequenz sind vorteilhafterweise zumindest zwei, insbesondere drei und vorzugsweise zwei bzw. drei bis sechs unterschiedliche Codes erzeugt.

Die unterschiedlichen Codes sind bevorzugt verschiedenen Lichtsendern eines Lichtgitters zugeordnet.

Gemäß einer bevorzugten praktischen Ausführungsform des erfindungsgemäßen optoelektronischen Sensors sind die von den Lichtsendern simultan in den Überwachungsbereich ausgesandten Lichtsignale jeweils durch ein nach dem DSSS (Direct Sequence Spread Spectrum)-Bandspreizverfahren mit dem betreffenden Code moduliertes Ausgangssignal erzeugt.

Gemäß diesem DSSS-Bandspreizverfahren kann ein jeweiliges Ausgangssignal mittels einer vorgegebenen Bitfolge gespreizt werden. Diese Bitfolge wird auch als Spreizcode oder Chipping-Sequenz bezeichnet.

Die von den Lichtsendern simultan in den Überwachungsbereich ausgesandten Lichtsignale werden zweckmäßigerweise jeweils durch wenigstens einen mit dem betreffenden Code gemischten Lichtpuls erzeugt. In diesem Fall ist das jeweilige Ausgangssignal also durch wenigstens einen Lichtpuls gebildet.

Zweckmäßigerweise werden die von dem Lichtempfänger insbesondere als Summensignal empfangenen Lichtsignale zur Identifizierung des einem jeweiligen Lichtsender zugeordneten Ausgangssignals mit dem dem betreffenden Lichtsender zugeordneten Code beaufschlagt.

Dabei umfasst die Steuer- und/oder Auswerteeinrichtung vorzugsweise Mittel, um zur Identifizierung des einem jeweiligen Lichtsender zugeordneten Ausgangssignals die Autokorrelationsfunktion zwischen den empfangenen Lichtsignalen bzw. Summensignal und dem betreffenden Code zu bilden.

Zweckmäßigerweise ist jeweils zumindest zwei, insbesondere drei und vorzugsweise zwei bzw. drei bis sechs Lichtsendern ein gemeinsamer Lichtempfänger zugeordnet.

Bei simultan ausgesandten quasi-orthogonalen Hadamard-Walsh-Codes erfolgt die Synchronisation des Sensors bzw. Lichtgitters zweckmäßigerweise über einzelne Pseudozufallssequenzen.

Bei simultan ausgesandten zyklisch verschobenen M-Sequenzen, Gold-Sequenzen bzw. Kasami-Sequenzen erfolgt die Synchronisation des Sensors bzw. Lichtgitters bevorzugt über das vom zugeordneten gemeinsamen Lichtempfänger empfangene Summensignal.

Lichtsender und Lichtempfänger können zumindest teilweise aufeinander gegenüberliegenden Seiten des Überwachungsbereichs angeordnet sein. Grundsätzlich ist es auch möglich, Lichtsender und Lichtempfänger auf einer Seite des Überwachungsbereichs und einen Retroreflektor auf der gegenüberliegenden Seite des Überwachungsbereichs anzuordnen. Die zweite Variante entspricht einer Autokollimationsanordnung.

Wie bereits erwähnt, sind die Lichtsender und Lichtempfänger bevorzugt in einer Lichtgitteranordnung vorgesehen.

Bevorzugt ist jeweils mehreren Lichtsendern ein gemeinsamer Lichtempfänger zugeordnet und entsprechend die Anzahl der Lichtempfänger geringer als die Anzahl der Lichtsender.

Werden also sogenannte Spread-Spektrum-Techniken bei Lichtgittern als CDMA-Verfahren angewendet, so können zwar prinzipiell Kasami-Folgen, Gold-Codes, M-Sequenzen, Barker-Codes, ein Hadamard-Walsh-Code oder eine Kombination dieser Codes als Pulsfolgen benutzt werden. Da es bei Lichtgittern jedoch auf eine schnelle Ansprechzeit ankommt, ist es nun aber nicht möglich, beliebig lange Pulsfolgen zu benutzen. Die Pulsfolgen sind daher in der Praxis auf die Länge von $2^N-1$ Chips begrenzt (N =5, 6, 7, 8 (max)). Dies bedeutet, dass die Pulsfolgen nur quasi-orthogonal sein können. Es soll nun ein Empfänger von mehreren, zum Beispiel 3 bis 6 Sendern bestrahlt werden, wobei die einzelnen Signale durch Signalauswertung im Sinne des CDMA-Verfahrens eindeutig identifizierbar sein sollen.

Die Orthogonalität ist in zweierlei Hinsicht zu betrachten. So können die Codes und die Auswertung sowie das Timinig so gewählt sein, dass mehrere Systeme oder Lichtschranken, die räumlich nebeneinander betrieben werden, keinen oder nur einen geringen Einfluss aufeinander ausüben. Damit sind die Systeme zueinander orthogonal, das heißt es ist insoweit die Orthogonalität außerhalb eines jeweiligen Systems gewährleistet.

Zum anderen soll die Orthogonalität innerhalb eines jeweiligen Systems, das heißt beispielsweise innerhalb eines Lichtgitters gegeben sein. Dabei sollen die simultan gesendeten Codes zumindest im Wesentlichen keinen Einfluss aufeinander ausüben, sodass die Folgen auch bei einer Relativverschiebung noch eindeutig identifiziert werden können. Hierbei sind die Sequenzen oder Folgen zueinander orthogonal.

Da nur quasi-orthogonale Codes erzeugt und verwendet werden können, kann sich das System durch die simultan gesendeten Signale möglicherweise selbst stören, was besonders kritisch ist, da die Fluktuationen der Lichtenergie der eingesetzten LEDs bedingt durch den Herstellungsprozess natürlichen Schwankungsbreiten unterliegen. So kann beispielsweise davon ausgegangen werden, dass ein Störpegel maximal um einen Faktor 2 stärker als der eigentliche Sender in den Empfänger einstrahlt, was bedeutet, dass der Nutzcode um einen Faktor schwächer sein kann als der Störcode. Dies kann dazu führen, dass der Empfänger ab und zu den Störcode als Nutzsignal erkennt. Die Anwendung des DSSS (Direct Sequence Spread Spectrum) / CDMA (Code Division Multiple Access)-Verfahrens führt zu einer Minimierung der FAR (False Acceptance Rate).

Aufgrund der erfindungsgemäßen Lösung wird eine Verringerung der Störempfindlichkeit durch simultan gesendete Codes erreicht, sodass bei Lichtgittern eine Anwendung des DSSS (Direct Sequence Spread Spectrum)-Bandspreizverfahrens als CDMA (Code Division Multiple Access)-Verfahren möglich ist.

Dabei können erfindungsgemäß insbesondere die folgenden Strategien angewandt werden, um auszuschließen, dass ein Störcode als Nutzcode erkannt wird:

- Es werden quasi-orthogonale Hadamard-Walsh-Codes im synchronisierten Betrieb verwendet, wobei zur Synchronisation einzelne pn-oder Peusdozufalls-Sequenzen herangezogen werden können.

- Es werden quasi-orthogonale verschobene M-Sequenzen im synchronisierten Betrieb verwendet, wobei zur Synchronisation das Summensignal aller simultan gesendeten Codes herangezogen werden kann.

- Bei n simultan gesendeten Codes werden n verschiedene Korrelations-Spektren ausgewertet. Da die Codes auch simultan empfangen werden, muss die Position der einzelnen Peaks an gleicher Position sein. Durch die Positionen können die unterschiedlichen Spektren verknüpft ausgewertet werden, was die FAR (False Acceptance Rate) deutlich minimiert.

- Bei verschobenen M-Sequenzen treten in einem Korrelations-Spektrum Peaks aller simultan gesendeten Codes auf, sodass alle Codes mit lediglich einem Auswertevorgang identifiziert werden können, wobei hier ein konstanter Abstand der einzelnen Peaks ausschlaggebend ist. Die Auswertung kann also insbesondere mittels eines einzigen Korrelationsvorgangs mit nur einem Korrelationsspektrum durchgeführt werden.

Aufgrund der erfindungsgemäßen Lösung wird eine Reihe von Vorteilen erzielt. So wird durch die simultan gesendeten Signale die Übertragungszeit im Lichtkanal reduziert. Zudem ergibt sich mit den simultan gesendeten Signalen eine Verringerung der Anzahl an kostenintensiven Empfangs-ASICs. Es hat sich gezeigt, dass auch mit simultan gesendeten Signalen beispielsweise bei 30 mm-Optiken die Reichweite von 20 m auf mehr als 100 m gesteigert wird. Beispielsweise bei N = 7 (N = Ordnung des Generator-Polynoms) sind für den Einsatz des DSSS-Verfahrens bis zu 16 Codes möglich, wobei jeder dieser Codes durch zyklische Verschiebung bis zu sechs weitere verschobene M-Sequenzen erzeugen kann. So können beispielsweise bis zu sechs Codes bzw. verschobene M-Sequenzen simultan gesendet werden. Durch eine Verknüpfung der Korrelations-Spektren ergibt sich eine sehr geringe FAR (False Acceptance Rate) auch bei einem Einstrahlen von Störsendern nach IEC 61496.

Die Erfindung wird im Folgenden anhand von Ausführungsbeispielen unter Bezugnahme auf die Zeichnung näher erläutert; in dieser zeigen:

Fig. 1       ein Signalflussdiagramm eines Ausführungsbeispiels eines eine Sendeeinheit mit drei Lichtsendern, einen optischen Kanal und eine Lichtempfangseinheit mit ei- nem Lichtempfänger umfassenden Systems,

Fig. 2       ein Beispiel eines binären Codes,

Fig. 3       ein Beispiel eines Code-Signals,

Fig. 4       ein Beispiel eines Summen-Signals,

Fig. 5       ein Beispiel eines diskreten Summen-Signals,

Fig. 6       ein Beispiel eines Referenz-Codes,

Fig. 7       ein Signalfluss-Diagramm einer beispielhaften Auswer- tung,

Fig. 8       ein Korrelations-Spektrum zur Begriffserklärung,

Fig. 9       ein Zustandsgraph des Systems,

Fig. 10      eine Darstellung eines Code-Signals und Referenz- Codes mit einer Verschiebung τ,

Fig. 11      ein Korrelations-Spektrum mit einer Verschiebung τ der Peak-Position,

Fig. 12      einen beispielhaften Verlauf der Peak-Position unter idealen Bedingungen,

Fig. 13      einen beispielhaften Verlauf der Peak-Position mit unterschiedlichen Störungen,

Fig. 14      das Prinzip von verschobenen M-Sequenzen,

Fig. 15      einen beispielhaften Verlauf der Peak-Position mit Synchronisation auf ein Code-Signal,

Fig. 16      einen beispielhaften Verlauf der Peak-Position mit Synchronisation auf das Summensignal,

Fig. 17      beispielhafte Korrelations-Spektren der drei Codes,

Fig. 18      eine erweiterte Berechnung des PSR für verschobene M-Sequenzen,

Fig. 19      das Prinzip bei auftretenden Stör-Peaks, und

Fig. 20      ein FAR-FRR-Map von verschobenen M-Sequenzen mit verknüpfter Auswertung.

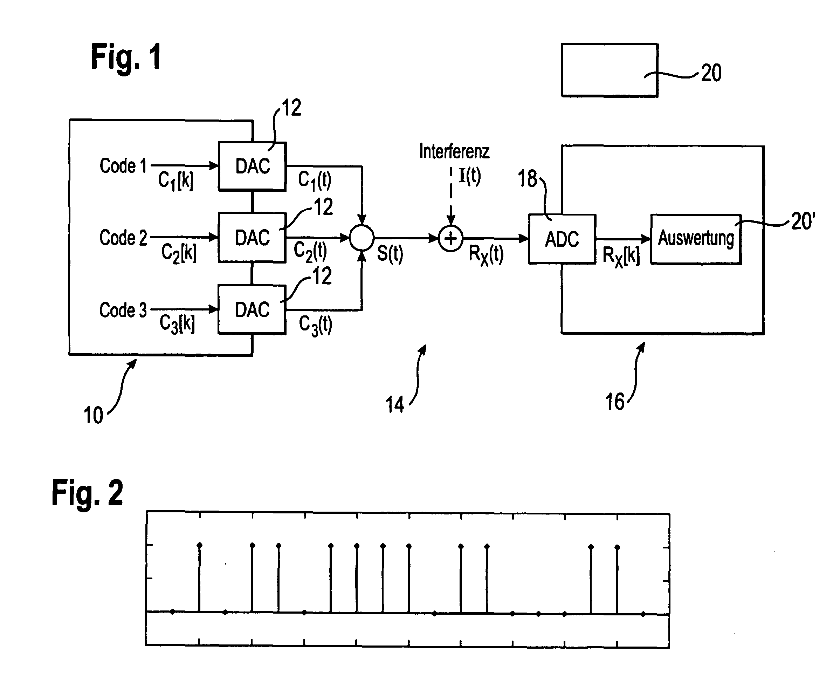

Fig. 1 zeigt ein Signalfluss-Diagramm eines Ausführungsbeispiels eines eine Sendeeinheit 10 mit drei Lichtsendern 12, einen optischen Kanal 14 und eine Lichtempfangseinheit 16 mit einem Lichtempfänger 18 umfassenden Systems. Ein solches System ist Teil eines optoelektronischen Sensors, der ein oder mehrere solche Systeme umfassen kann. Grundsätzlich kann ein jeweiliges System auch lediglich zwei oder mehr als drei Lichtsender 12 umfassen. Zudem kann der optoelektronische Sensor mit einer Steuer- und/oder Auswerteeinrichtung 20 versehen sein. Bei dem optoelektronischen Sensor kann es sich insbesondere um ein Lichtgitter handeln.

Ein betreffender optoelektronischer Sensor kann also insbesondere mehrere Lichtsender 12 zur Aussendung von Lichtsignalen in einen Überwachungsbereich, wenigstens einen Lichtempfänger 18 zum Empfang von von den Lichtsendern 12 ausgesandten Lichtsignalen und eine Steuer- und/oder Auswerteeinrichtung 20 zur Erzeugung und oder Beeinflussung der Lichtsignale und zur Erzeugung eines Objektfeststellungssignals im Falle des Vorhandenseins eines Objektes im Überwachungsbereich in Abhängigkeit von den Ausgangssignalen des Lichtempfängers 18 umfassen.

Dabei sind erfindungsgemäß wenigstens zwei Lichtsender 12 vorgesehen, deren zumindest im Wesentlichen simultan in den Überwachungsbereich ausgesandte Lichtsignale jeweils durch ein nach dem Bandspreizverfahren mit einem Code moduliertes Ausgangssignal erzeugt sind, wobei die Codes verschiedener Lichtsender 12 durch quasi-orthogonale Hadamard-Walsh-Codes erzeugt sein können oder einem ersten Lichtsender ein erster Code in Form eines eine M-Sequenz umfassenden Pseudozufallscodes zugeordnet ist, der eine in mehrere Code-Segmente aufgeteilte Mutter-Sequenz bildet, und wenigstens einem weiteren Lichtsender 12 ein sich zumindest vom ersten Code unterscheidender weiterer Code zugeordnet ist, der durch eine zyklische Verschiebung der Code-Segmente der Mutter-Sequenz erzeugt ist, wobei die den verschiedenen Lichtsendern 12 zugeordneten unterschiedlichen Codes wieder quasi-orthogonale Codes bilden.

Die Steuer- und/oder Auswerteeinrichtung 20 kann beispielsweise so ausgeführt sein, dass bei n zumindest im Wesentlichen simultan gesendeten Codes empfangsseitig n verschiedene Korrelationsspektren ausgewertet werden. Dabei können die n verschiedenen Korrelationsspektren insbesondere über die Positionen der einzelnen Korrelationspeaks verknüpft ausgewertet werden.

Die Steuer- und/oder Auswerteeinrichtung kann vorteilhafterweise auch so ausgeführt sein, dass bei zumindest im Wesentlichen simultan ausgesandten zyklisch verschobenen M-Sequenzen empfangsseitig sämtliche Codes mit lediglich einem Auswertevorgang identifizierbar sind. Die Auswertung kann also insbesondere mittels eines einzigen Korrelationsvorgangs mit nur einem Korrelationsspektrum durchgeführt werden.

Bei zumindest im Wesentlichen simultan ausgesandten zyklisch verschobenen M-Sequenzen kann die quasi-orthogonale Eigenschaft der unterschiedlichen Codes auf den Autokorrelationseigenschaften der M-Sequenzen basieren.

Die Mutter-Sequenz kann insbesondere in zumindest drei Code-Segmente aufgeteilt sein. Durch die zyklische Verschiebung der Code-Segmente der Mutter-Sequenz können zumindest zwei und insbesondere zumindest drei unterschiedliche Codes erzeugt sein. Dabei können die unterschiedlichen Codes insbesondere verschiedenen Lichtsendern 12 eines Lichtgitters zugeordnet sein.

Die von den Lichtsendern 12 zumindest im Wesentlichen simultan in den Überwachungsbereich ausgesandten Lichtsignale können insbesondere jeweils durch ein nach dem DSSS (Direct Sequence Spread Spectrum)-Bandspreizverfahren mit dem betreffenden Code moduliertes Ausgangsignal erzeugt sein. Dabei können die von den Lichtsendern 12 zumindest im Wesentlichen simultan in den Überwachungsbereich ausgesandten Lichtsignale insbesondere jeweils durch wenigstens einen mit dem betreffenden Code gemischten Lichtpuls erzeugt sein.

Die von den Lichtempfänger 18 insbesondere als Summensignal empfangenen Lichtsignale können zur Identifizierung des einem jeweiligen Lichtsender 12 zugeordneten Ausgangssignals mit dem einen jeweiligen Lichtsender 12 zugeordneten Code beaufschlagbar sein. Dabei kann die Steuer- und/oder Auswerteeinrichtung 20 Mittel 20' umfassen, um zur Identifizierung des einem jeweiligen Lichtsender 12 zugeordneten Ausgangssignals die Autokorrelationsfunktion zwischen den empfangenen Lichtsignalen bzw. Summensignal und dem betreffenden Code zu bilden.

Bei zumindest im Wesentlichen simultan ausgesandten quasi-orthogonalen Hadamard-Walsh-Codes kann die Synchronisation des Sensors insbesondere über einzelne Pseudozufallssequenzen erfolgen. Bei zumindest im Wesentlichen simultan ausgesandten zyklisch verschobenen M-Sequenzen kann die Synchronisation des Sensors insbesondere über das vom zugeordneten gemeinsamen Lichtempfänger 18 empfangene Summensignal erfolgen.

Lichtsender 12 und Lichtempfänger 18 können zumindest teilweise auf einander gegenüberliegenden Seiten des Überwachungsbereichs angeordnet sein. Grundsätzlich sind jedoch beispielsweise auch solche Ausführungen denkbar, bei denen Lichtsender 12 und Lichtempfänger 18 auf einer Seite des Überwachungsbereichs und ein Retroreflektor auf der gegenüberliegenden Seite des Überwachungsbereichs angeordnet sind. Wie bereits erwähnt, sind die Lichtsender 12 und Lichtempfänger 18 bevorzugt in einer Lichtgitteranordnung vorgesehen. Dabei kann, wie ebenfalls bereits erwähnt, jeweils mehreren Lichtsendern 12 ein gemeinsamer Lichtempfänger 18 zugeordnet sein, sodass die Anzahl der Lichtempfänger 18 geringer ist als die Anzahl der Lichtsender 12.

Ziel der Auswertungsstrategie ist es, insbesondere innerhalb eines Lichtgitters das Vorhandensein aller simultan gesendeten Codes eindeutig zu bestimmen, sodass ein sicherer und zuverlässiger Betrieb möglich ist.

Neben den Code-Eigenschaften kommt es auch auf die Gestaltung der Auswertung an. Dabei sollen die im System vorhandenen Informationen berücksichtigt und in der Auswertungsstrategie bestmöglich vereinigt werden.

Bei dem in der Fig. 1 wiedergegebenen Ausführungsbeispiel werden mittels den Lichtsendern 12 zugeordneter Sendedioden (hier: DAC, Digital Analog Converter) die zunächst binären Codes $C_h[k]$ mit einer Chiprate von z. B. 4 MHz digital-analog gewandelt.

Fig. 2 zeigt ein Beispiel eines binären Codes.

Die Sendedioden strahlen die analogen Code-Signale $C_h(t)$ auf das Empfangsmodul. Die dargestellte Bandpass-Charakteristik des Code-Signals resultiert aus den Bandpass-Eigenschaften des Empfangsmoduls.

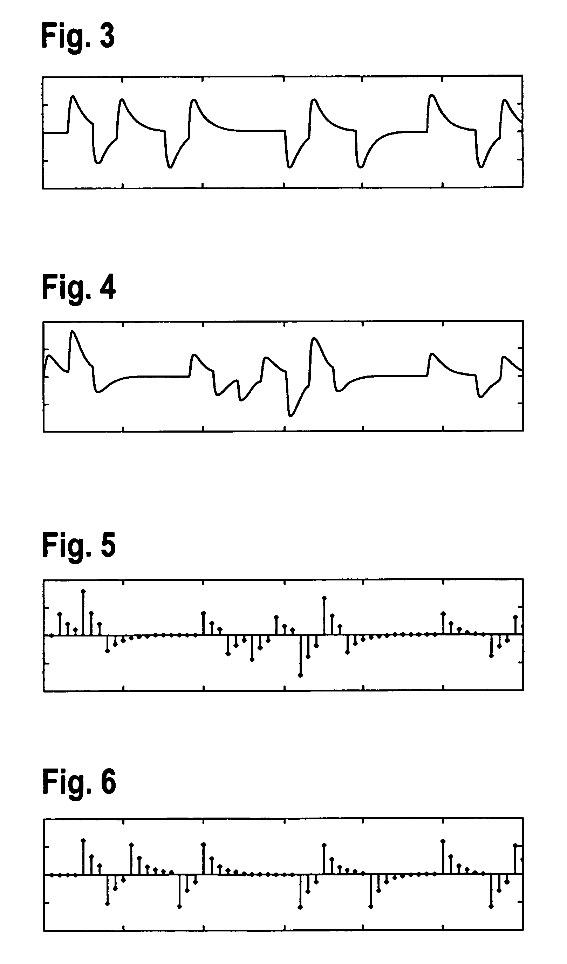

Fig. 3 zeigt ein Beispiel eines Code-Signals.

Im optischen Übertragungskanal überlagern sich Code-Signale sowie optische Störer (Interferenz, vgl. auch nochmals Fig. 1) additiv zum Summen-Signal $R_x(t)$:

$$R_x(t) = C_1(t) + C_2(t) + C_3(t) + I(t)$$

Fig. 4 zeigt ein Beispiel eines Summen-Signals.

Das empfangene Summen-Signal wird nun mit einer Abtastrate von beispielsweise 12 MHz abgetastet und steht als zeit- und wertdiskretes Summen-Signal $R_x[k]$ der Auswertung zur Verfügung.

Fig. 5 zeigt ein Beispiel eines diskreten Summen-Signals.

Die Auswertung erfolgt über im Quell-Code abgelegte zeit- und wertdiskrete Referenz-Codes.

Fig. 6 zeigt ein Beispiel eines Referenz-Codes.

Im Folgenden sei näher auf das Auswerte-Prinzip eingegangen.

Dabei kann zur Detektion der einzelnen Code-Signale $C_h(t)$ das diskrete Summen-Signal $R_x[k]$ in drei Korrelationsvorgängen mit den einzelnen Referenz-Codes $C_{ref,h}[k]$ gefiltert werden. Die Korrelation ist hier beispielsweise als FIR-Filter, das heißt als sogenanntes "Matched Filter" zu verstehen (FIR = Finite Impulse Response).

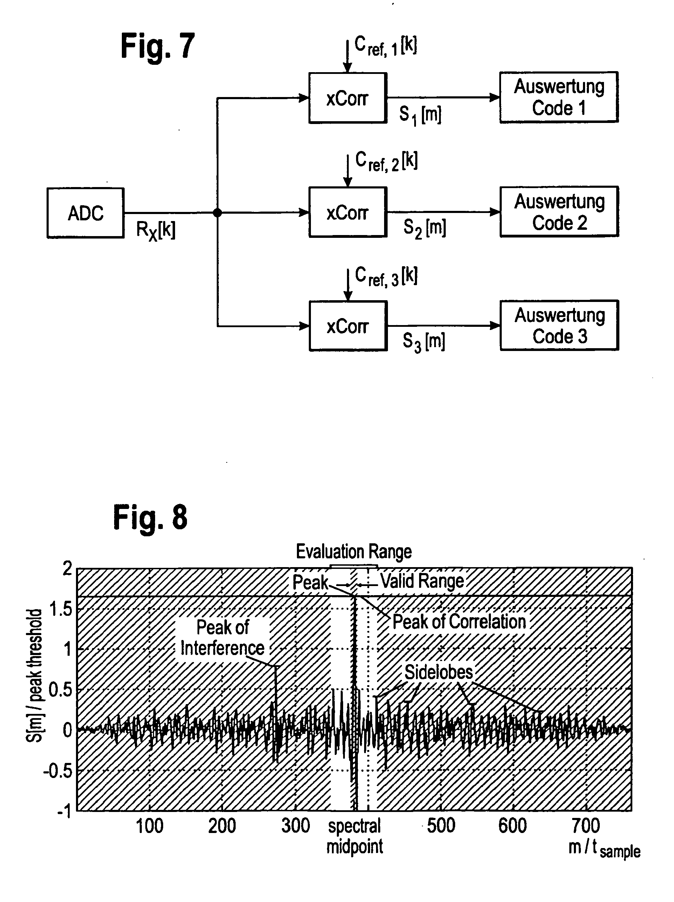

Fig. 7 zeigt ein Signalfluss-Diagramm einer beispielhaften Auswertung, die ebenso wie alle anderen Steuer- bzw. Auswerteschritte insbesondere von der Steuer- und/oder Auswerteeinheit 20 durchgeführt werden kann.

Die Auswertestrategie ist vom verwendeten Code-Typ abhängig. Dabei dienen im Wesentlichen das PSR (Peak-Sidelobe-Ratio) sowie Höhe und Position des Korrelations-Peaks als Auswertekriterien. Das Korrelations-spektrum $S_h[m]$ ist gegeben durch:

$$S_h[m] = \sum_{k=1}^{N} R_x[k] \cdot C_h[k + N - m]; \quad \text{mit } m \, \varepsilon \, [1, N \cdot 2 - 1] \text{ und } h = [1, 3]$$

Fig. 8 zeigt ein Korrelationsspektrum zur Erklärung der folgenden Begriffe:

Korrelations-Peak (Peak of Correlation)

Die Referenz-Codes dienen als b-Koeffizienten der einzelnen Filter. Entsprechend der Signal-Theorie ist die Impulsantwort des Filters der Referenz-Code. Da es sich hier um ein lineares zeitinvariantes System handelt, wird die Systemantwort, mit dem Referenz-Code als Eingangssignal, ein Diracstoss sein. Der Diracstoss sei hier auch als Korrelations-Peak (Peak of Correlation) bezeichnet.

Stör-Peaks (Peak of Interference)

Durch optische Störer können im Korrelations-Spektrum Stör-Peaks (Peaks of Interference) entstehen.

Korrelations-Rauschen (Sidelobes)

Da nur eine endliche Anzahl von Abtastwerten des Summen-Signals betrachtet wird und das System nicht rauschfrei ist (ASIC-Rauschen), entsteht im Korrelations-Spektrum sogenanntes Korrelations-Rauschen (Sidelobes).

Peak

Der Kurven-Punkt mit maximalem Ordinaten-Wert des Korrelations-Spektrums wird als Peak bezeichnet. Hierbei wird der Abszissen-Wert als Peak-Position (Peak-Pos) und der Ordinaten-Wert als Peak-Höhe (Peak) bezeichnet.

PSR (Peak to Sidelobe Ratio)

Das PSR ist das Verhältnis von maximalem Peak zu maximalen Sidelobes oder zu maximalen Stör-Peaks.

Auswertebereich (Evaluation Range)

Um das PSR zu berechnen, wird zur Optimierung der Systemansprechzeit der Auswertebereich (Evaluation Range) auf einen kleinen Spektralbereich reduziert. Lediglich bei der Synchronisation wird das gesamte Korrelations-Spektrum betrachtet.

Erlaubter Bereich (Valid Range)

Dieses schmale Band im Korrelations-Spektrum dient der Synchronisation und der Signalauswertung. Dieser Bereich kann nicht auf eine einzige Position reduziert werden, da das System Toleranz zur Regelung benötigt.

Im Folgenden wird das Synchronisations- und Regelverhalten näher betrachtet.

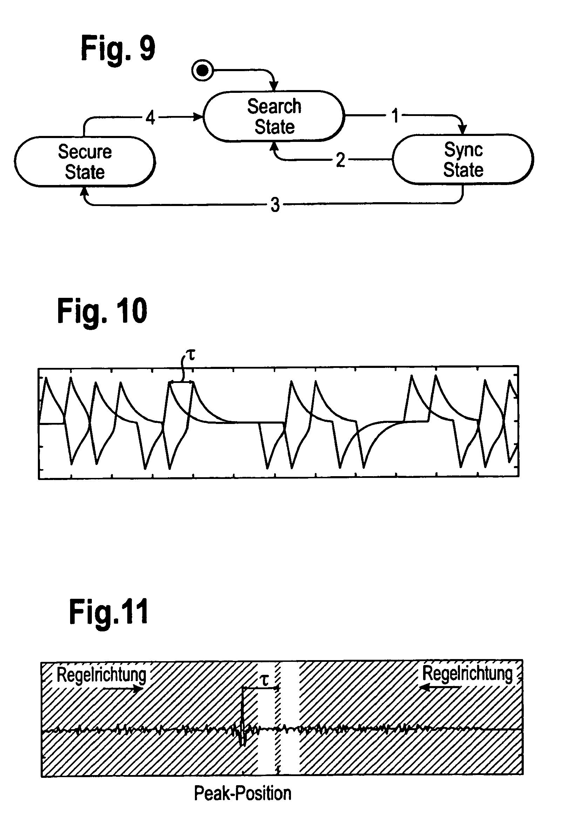

Das System hat drei Zustände, die in dem in der Fig. 9 wiedergegebenen Zustandsgraph angegeben sind. Zur Synchronisation und zur Regelung dienen im Wesentlichen das PSR sowie Höhe und Position des Korrelations-Peaks.

In der folgenden Tabelle sind die Zustandswechsel-Bedingungen des Systems wiedergegeben:

| ID | Beschreibung |
|---|---|
| 1 | PSR $\geq$ PSR-Threshold && Peak $\geq$ Peak-Threshold |
| 2 | PSR < PSR-Threshold $\parallel$ Peak < Peak-Threshold |
| 3 | 50-mal: PSR $\geq$ PSR-Threshold && Peak $\geq$ Peak-Threshold && Peak-Pos $\in$ Valid Range |
| 4 | 100-mal: PSR < PSR-Threshold $\parallel$ Peak < Peak-Threshold |

Im Folgenden sind die in der Fig. 9 sowie in der vorangegangenen Tabelle angegebenen Zustände näher erläutert:

Search State

Sender und Empfänger werden gezielt asynchron betrieben. Sobald ein Peak detektiert wird (Bedingung ID 1), wechselt das System in den Zustand "Sync State".

Sync State

Der Trigger-Timer startet den nächsten Abtastvorgang. Der Startzeitpunkt des Abtastens wirkt sich unmittelbar auf die Peak-Position aus. Die Peak-Position wird so in den Mittelpunkt des Korrelations-Spektrums geregelt. Dieser Vorgang wird Synchronisation genannt. Sobald die Peak-Position beispielsweise 50-mal innerhalb des Bereichs "Valid Range" liegt, wechselt das System in den Zustand "Secure State".

Secure State

Das System regelt zu jeder Zeit die Position des Peaks nach, sodass die Peak-Position innerhalb des Bereichs "Valid Range" bleibt. Steht dem System beispielsweise über 100 Scans kein Signal mehr zur Regelung zur Verfügung, wechselt das System in den Zustand "Search State".

Im Folgenden sei näher auf das Synchronisations-Prinzip eingegangen.

Zur Synchronisation des Systems muss das Signal eindeutig detektier- und regelbar sein. Sind Code-Signal und Referenz-Code ohne Verschiebung $\tau$ zueinander vorhanden, ergibt sich ein Korrelations-Peak mittig innerhalb des Korrelations-Spektrums.

Sind Code-Signal und Referenz-Code voneinander um $\tau$ verschoben (vgl. Fig. 10), tritt der Korrelations-Peak mit gleicher Verschiebung $\tau$ im Spektrum auf (vgl. Fig. 11).

Fig. 10 zeigt also das Code-Signal und den Referenz-Code mit einer Verschiebung $\tau$, während in der Fig. 11 das Korrelations-Spektrum mit einer Verschiebung $\tau$ der Peak-Position wiedergegeben ist.

Die Verschiebung $\tau$ entsteht durch zeitlich zu frühes oder zu spätes Abtasten. Das empfangene Signal wird abhängig von der Verschiebung $\tau$, wie dies im Folgenden beschrieben ist:

$$R_x[k] = C[k + \tau]$$

Das Korrelations-Spektrum berechnet sich wie folgt:

$$S[m] = \sum_{k=1}^{N} C[k] \cdot R_x[k + N - m]; \quad \text{mit } m \in [1, N \cdot 2 - 1]$$

Hierfür ergibt sich für die Peak-Position folgender Zusammenhang:

$$\text{Peakposition} = \tau + N$$

Unter idealen Bedingungen ergibt sich folgender Verlauf für die Peak-Position in Abhängigkeit von der Verschiebung $\tau$:

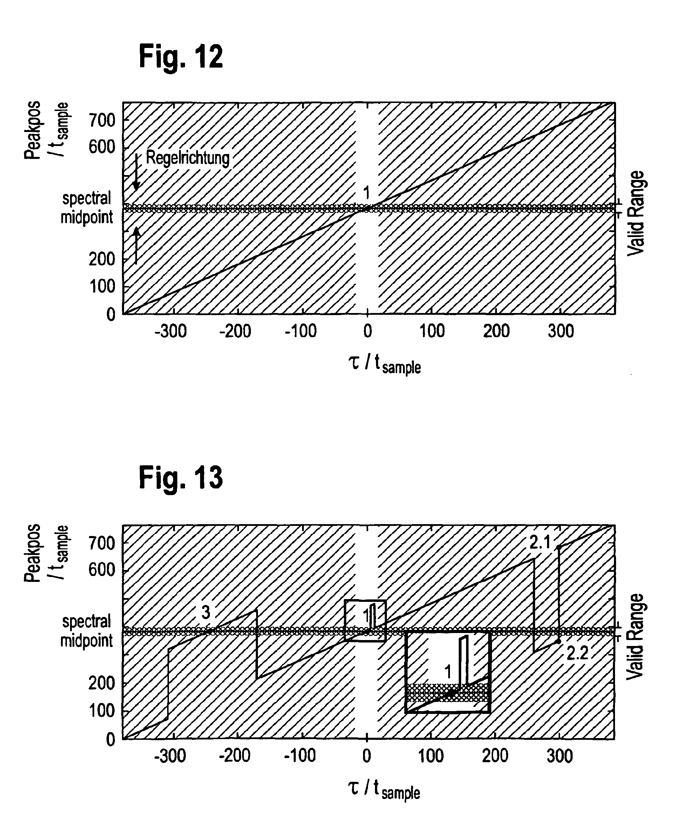

Das System regelt den Peak zur Mitte des Korrelations-Spektrums (vgl. Fig. 12, Punkt 1). Für eine fehlerfreie Synchronisation ist im "Sync State" ein stetiger Verlauf im grauen Bereich erforderlich.

Sobald das System synchronisiert ist, muss lediglich die exakte Position nachgeregelt werden. Die Regelung im "Secure State" benötigt hierfür nur im erlaubten Bereich (Valid Range) einen stetigen Verlauf.

Fig. 12 zeigt den Verlauf der Peak-Position unter idealen Bedingungen.

Dieser Verlauf wurde mathematisch hergeleitet und entspricht nicht exakt dem tatsächlichen Verlauf des implementierten oder simulierten Systems.

Bei der Auswertung wird mittels einer Signalverarbeitung die Peak-Position bestimmt. Hierbei kann sich durch die Code-Signal-Charakteristik ein nicht stetiger Verlauf der Peak-Position ergeben. Werden vom System nicht der Korrelations-Peak sondern andere spektrale Peaks als Peak erkannt, kommt es zu einem unstetigen Verlauf der vom System identifizierten Peak-Position, was als Sprung der Peak-Position bezeichnet werden kann. Dabei können die folgenden Sprungarten unterschieden werden:

1. Sprung resultierend aus der Code-Signal-Charakteristik, wobei dieser Sprung auch bei geringer Signaldämpfung auftritt.
2. Sporadischer Sprung, der aus der Korrelation von Referenz-Code und ASIC-Rauschen resultiert.

Ist der Verlauf nicht stetig, können folgende Effekte bei der Synchronisation im "Sync State" sowie dem Regeln im "Secure State" auftreten:

1. Sync State: Sobald innerhalb des erlaubten Bereichs ein Sprung des Peak-Position auftritt, wird das System nicht in den "Secure State" gelangen. Treten die Sprünge sporadisch auf, wird der "Secure State" erreicht.
Secure State: Jedoch wird das System auch bei nicht unterbrochenem Schutzfeld, entsprechend dem Sprung, sporadisch auf "rot" schalten.
2. Sync State: Treten Sprünge über den Mittelpunkt des Korrelations-Spektrums auf (von 2.1 nach 2.2 in Fig. 13), regelt das System sich um diese Sprünge ein. Da jedoch der erlaubte Bereich nicht erreicht wird, kann das System nicht synchronisieren.
3. Sync State: Ergeben sich stetige Verläufe der Peak-Position über den Mittelpunkt des Korrelations-Spektrums bei einer Verschiebung $\tau \neq 0$, wird sich das System auf diese Verschiebung synchronisieren. Das System wird nicht die gleich hohe Verfügbarkeit gewährleisten wie bei korrekter Synchronisation bei $\tau = 0$, ist jedoch prinzipiell funktionsfähig. Dies sollte dennoch vermieden werden, da bei verschobener Synchronisation nicht die gewünschte Störempfindlichkeit erreicht wird.

Fig. 13 zeigt den Verlauf der Peak-Position mit unterschiedlichen Störungen.

Im Folgenden sei näher auf die Auswertestrategie im Zusammenhang mit einer verschobenen M-Sequenz (Shifted M-Sequence) eingegangen.

Verschobene Sequenzen (Shifted M-Sequences) stellen eine Alternative zu orthogonalen Hadamard-Walsh-Codes dar. Durch zyklische Verschiebung der M-Sequenzen lassen sich "quasi-orthogonale" Codes erzeugen, basierend auf den optimalen Autokorrelations-Eigenschaften der M-Sequenzen.

Das Prinzip der verschobenen M-Sequenz ergibt sich aus folgendem:

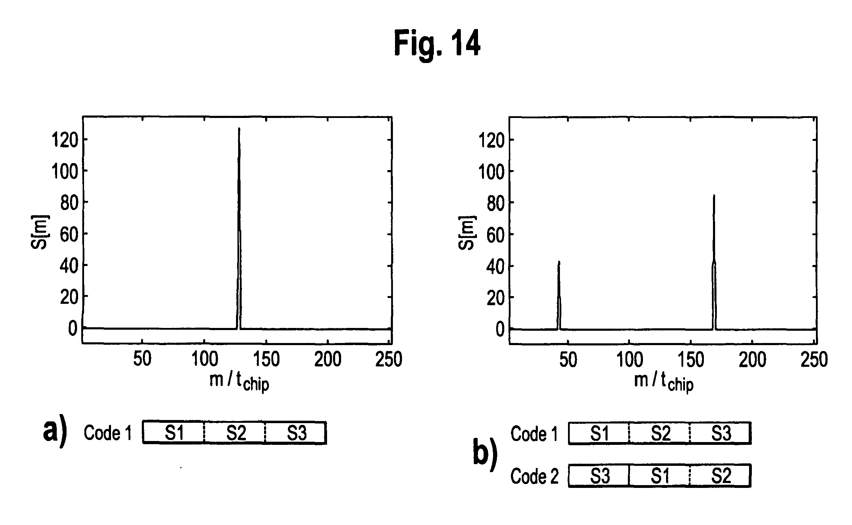

Fig. 14a zeigt das typische Autokorrelations-Spektrum einer M-Sequenz, wobei der Korrelations-Peak bei minimalem Korrelations-Rauschen maximal ist. Dieser Korrelations-Peak wird im Folgenden, bezogen auf verschobene M-Sequenzen, auch als Haupt-Peak (Main-Peak) bezeichnet.

Code 1 dient nun als "Mutter-Sequenz" und wird in Fig. 14a in drei Code-Segmente $S_1$, $S_2$ und $S_3$ aufgeteilt dargestellt. Cod 2 wird durch zyklische Verschiebung um ein Code-Segment aus dem Code 1 generiert.

Bei einer Kreuzkorrelation von Code 1 und Code 2 wird die spektrale Energie auf zwei Korrelations-Peaks verteilt (vgl. Fig. 14b). Die Positionen der Korrelations-Peaks ergeben sich im Korrelations-Spektrum der Verschiebung der Code-Segmente entsprechend. Diese Korrelations-Peaks werden im Folgenden, bezogen auf verschobene M-Sequenzen, auch als Neben-Peaks (Side-Peaks) bezeichnet.

In der Fig. 14 ist dieses Prinzip der verschobenen M-Sequenzen wiedergegeben.

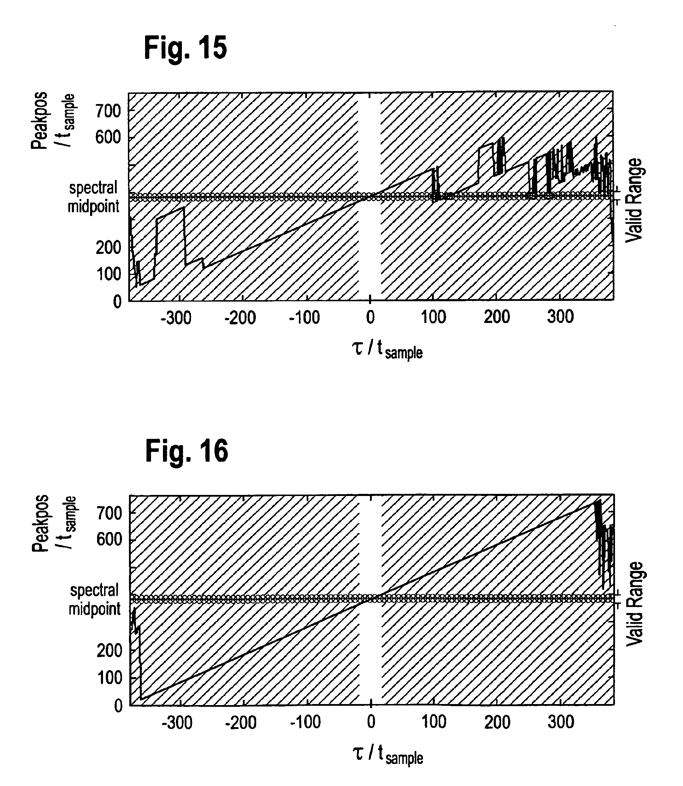

Was das Synchronisations-Verfahren betrifft, so ist bei M-Sequenzen eine Synchronisation mit lediglich einem Referenz-Code von vornherein ausgeschlossen. Die Wahrscheinlichkeit, auf einen Neben-Peak zu synchronisieren, ist zu hoch. Diese Vorab-Überlegung wird durch die Graphik der Fig. 15 belegt, in der der Verlauf der Peak-Position mit Synchronisation auf ein Code-Signal wiedergegeben ist.

Um ein fehlerhaftes Synchronisieren zu vermeiden, wird zur Synchronisation das Summensignal verwendet.

Fig. 16 zeigt den Verlauf der Peak-Position mit einer Synchronisation auf das Summensignal.

Es kann nun eine Erweiterung durch Verknüpfung der Korrelations-Spektren erreicht werden.

Bisher wurden die drei Korrelations-Spektren separat ausgewertet. Dies bedeutete, dass das PSR, das heißt das Verhältnis von Peak zu maximalen Sidelobes oder zu maximalen Stör-Peaks, von $S_1$ berechnet und geprüft wurde, ob Code 1 vorhanden ist. Anschließend wurde das PSR von $S_2$ berechnet und geprüft, ob Code2 vorhanden ist, und zuletzt wurde das PSR von $S_3$ berechnet und geprüft, ob Code 3 vorhanden ist.

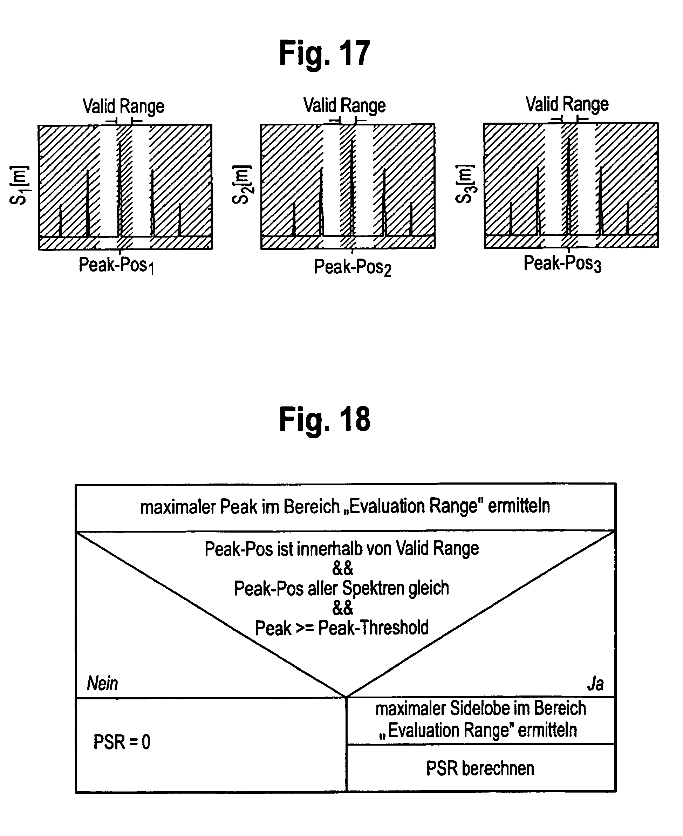

Fig. 17 zeigt nun die Korrelations-Spektren der drei Codes.

Da jedes der drei Spektren aus dem empfangenen Summen-Signal berechnet wird, ist die Verschiebung $\tau$ für alle Referenz-Codes gleich. Dies bedeutet, dass die Peak-Position der Haupt-Peaks aller Korrelations-Spektren gleich sein muss. Durch die Verschiebung $\tau$ können die drei Korrelations-Spektren miteinander verknüpft ausgewertet werden. Die Berechnung der PSR-Werte ist in der Fig. 18 dargestellt.

Gemäß Fig. 18 ist also eine erweiterte Berechnung des PSR für verschobene M-Sequenzen möglich.

Was die Auswirkungen auf die Störunempfindlichkeit betrifft, so wird folgendes Szenario betrachtet:

- Code-Signal 1 wird von einem Objekt unterbrochen, und zum gleichen Zeitpunkt wird durch einen optischen Störer ein Stör-Peak erzeugt. Annahme: Die Signalform ähnelt der des Code-Signals 1. Hierdurch wird im erlaubten Bereich des Korrelations-Spektrums ein Stör-Peak erzeugt. Dieser Stör-Peak wird nun vom System fälschlicherweise als Haupt-Peak von Code-Signal 1 erkannt.

- Mit einer separaten Auswertung bleibt das System auf "grün", obwohl einer der Strahlen unterbrochen ist, was als äußerst kritisches Ereignis einzustufen ist. "Grün" gezeichnet den Schaltzustand des Gerätes und bedeutet, dass das Schutzfeld nicht unterbrochen ist und somit der OSSD-Ausgang des Gerätes auf "high active" geschaltet ist. "Rot" bedeutet, dass das Schutzfeld unterbrochen ist und somit der OSSD-Ausgang des Gerätes auf "low" geschaltet ist.

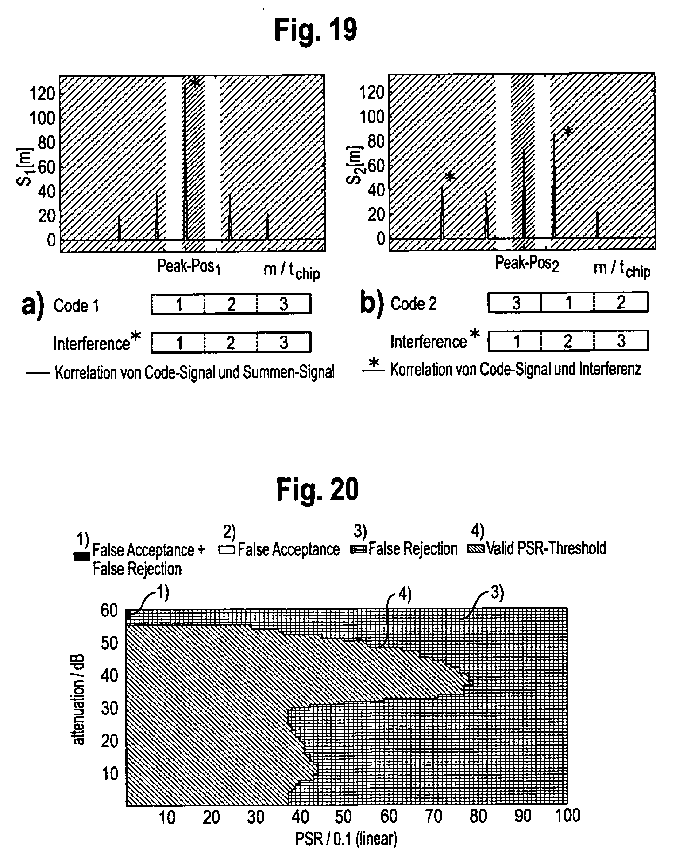

Fig. 19 veranschaulicht das Prinzip bei auftretenden Stör-Peaks.

Durch das Prinzip der verschobenen M-Sequenz wird bei Korrelation des Störers mit dem Code-Signal 2 die Energie des Stör-Peaks in zwei Neben-Peaks aufgeteilt. Hierbei wird auch die Peak-Position des Stör-Peaks entsprechend verändert.

Die Position des Stör-Peaks (Peak-Pos$_1$) in $S_1$ ist zwar innerhalb des erlaubten Bereichs (Valid Range), sie ist jedoch weder mit der Position des Stör-Peaks in $S_2$ noch mit der Position des Korrelations-Peaks in $S_2$ identisch.

Aus der erweiterten Auswertung für verschobene M-Sequenzen ergeben sich die folgenden Rückschlüsse:

Werden nun einer oder mehrere der Stör-Peaks fälschlicherweise als Haupt-Peak erkannt, so sind die Positionen der Haupt-Peaks der drei Korrelations-Spektren nicht identisch. Dies ist besonders im Hinblick auf das oben genannte Szenario sehr wichtig. Im direkten Vergleich ist eine deutliche Verbesserung des FAR (False Acceptance Ratio) zu erkennen, wobei die FRR (False Rejection Ratio) nur minimal schlechter ausfällt.

Fig. 20 zeigt ein FAR-FRR-Map von verschobenen M-Sequenzen mit verknüpfter Auswertung.

Die Verwendung von verschobenen M-Sequenzen erweist sich also als sehr vorteilhaft hinsichtlich der Signal-Orthogonalität sowie der Störunempfindlichkeit durch das Verknüpfen der Korrelations-Spektren.

Die Auswertung des Summensignals kann durch zwei unterschiedliche Methoden erfolgen, wobei beide Methoden auf dem zuvor erläuterten Prinzip von zyklisch verschobenen Sequenzen basieren.

Erste Methode:

Analyse des Summensignals mittels n Korrelationsvorgängen (n = Anzahl der aus einer Mutter-Sequenz erzeugten Sequenzen einschließlich der Mutter-Sequenz; z.B. bei drei Sendern auf einen Empfänger: n = 3, bei fünf Sendern auf einen Empfänger: n = 6), wobei die Peak-Positionen der einzelnen Korrelations-Spektren identisch sind. Diese Methode wurde zuvor im einzelnen beschrieben.

Zweite Methode:

Analyse des Summensignals mittels nur eines Korrelationsvorgangs, wobei der Referenz-Code wie folgt durch zyklische Verschiebung bzw. Verlängerung aus der Mutter-Sequenz erzeugt wird:

Die Mutter-Sequenz wird in n Segmente aufgeteilt (s1, s2, ... sn - 1, sn). Die einzelnen Codes werden wie bereits beschrieben durch zyklische Verschiebung erzeugt. Der Referenz-Code wird nun durch Verlängern der Mutter-Sequenz um n-1 Segmente erzeugt. Hierbei können die Segmente vor oder nach (synchron oder asynchron) der Mutter-Sequenz hinzugefügt bzw. angehängt werden. Es muss jedoch gewährleistet sein, dass der Referenz-Code einen Ausschnitt, mit einer Anzahl von insgesamt 2 · n - 1 Segmenten, aus der folgenden Code-Kette ist:

| S1 | ... | Sn | S1 | S2 | ... | Sn | S1 | ... | Sn |
|----|-----|----|----|----|-----|----|----|-----|----|

Mittels eines solchen Referenz-Codes entstehen im Korrelations-Spektrum n gleichwertige Korrelations-Peaks. Diese Peaks werden durch den jeweiligen übertragenen Code C1, C2, ... Cn erzeugt, sodass jeder einzelne Code mit nur einem Korrelations-Spektrum nachgewiesen werden kann.

Die bei der ersten Methode angewandte Verknüpfung der Korrelations-Spektren durch die Peak-Positionen zur Minimierung der FAR (False Acceptance Ratio) erfolgt bei dieser Methode über den Abstand der einzelnen Korrelations-Peaks. Dieser ist zu jeder Zeit konstant und entspricht der Verschiebung der Mutter-Sequenz. Das Überprüfen der Peak-Positionen der n Korrelations-Spektren (angewandt in der ersten Methode) ist äquivalent zur Überprüfung des Abstandes der n Korrelations-Peaks im Korrelations-Spektrum (der zweiten Methode).

Wie bereits erwähnt, kann der erste Code in Form eines eine M-Sequenz, Gold-Sequenz oder Kasami-Sequenz umfassenden Pseudozufallscodes vorgesehen sein.

## Bezugszeichenliste

10 Sendeeinheit
12 Lichtsender
14 optischer Kanal
16 Lichtempfangseinheit
18 Lichtempfänger
20 Steuer- und/oder Auswerteeinheit
20' Mittel .

## Patentansprüche

1. Optoelektronischer Sensor mit mehreren Lichtsendern (12) zur Aussendung von Lichtsignalen in einen Überwachungsbereich, wenigstens einem Lichtempfänger (18) zum Empfang von von den Lichtsendern ausgesandten Lichtsignalen und einer Steuer- und/oder Auswerteeinrichtung (20) zur Erzeugung und/oder Beeinflussung der Lichtsignale und zur Erzeugung eines Objektfeststellungssignals im Falle des Vorhandenseins eines Objektes im Überwachungsbereich in Abhängigkeit von den Ausgangssignalen des Lichtempfängers (18),
**dadurch gekennzeichnet,**
**dass** wenigstens zwei Lichtsender (12) vorgesehen sind, deren simultan in den Überwachungsbereich ausgesandte Lichtsignale jeweils durch ein nach dem Bandspreizverfahren mit einem Code moduliertes Ausgangssignal erzeugt sind, wobei die Codes verschiedener Lichtsender (12) durch orthogonale Hadamard-Walsh-Codes erzeugt sind oder einem ersten Lichtsender ein erster Code in Form eines eine M-Sequenz, Gold-Sequenz oder Kasami-Sequenz umfassenden Pseudozufallscodes zugeordnet ist, der eine in mehrere Code-Segmente aufgeteilte Mutter-Sequenz bildet, und wenigstens einem weiteren Lichtsender (12) ein sich zumindest vom ersten Code unterscheidender weiterer Code zugeordnet ist, der durch eine zyklische Verschiebung der Code-Segmente der Mutter-Sequenz erzeugt ist, wobei die den verschiedenen Lichtsendern (12) zugeordneten unterschiedlichen Codes wieder orthogonale Codes bilden.

2. Optoelektronischer Sensor nach Anspruch 1,
**dadurch gekennzeichnet,**
**dass** die Steuer- und/oder Auswerteeinrichtung (20) so ausgeführt ist, dass bei n simultan gesendeten Codes empfangsseitig n verschiedene Korrelationsspektren ausgewertet werden.

3. Optoelektronischer Sensor nach Anspruch 2,
**dadurch gekennzeichnet,**
**dass** die Steuer- und/oder Auswerteeinrichtung (20) so ausgeführt ist, dass die n verschiedenen Korrelationsspektren über die Positionen der einzelnen Korrelationspeaks verknüpft ausgewertet werden.

4. Optoelektronischer Sensor nach einem der vorhergehenden Ansprüche,
**dadurch gekennzeichnet,**

**dass** die Steuer- und/oder Auswerteeinrichtung (20) so ausgeführt ist, dass bei simultan ausgesandten zyklisch verschobenen M-Sequenzen, Gold-Sequenzen bzw. Kasami-Sequenzen empfangsseitig sämtliche Codes mit lediglich einem Auswertevorgang identifizierbar sind.

5. Optoelektronischer Sensor nach einem der vorhergehenden Ansprüche,
**dadurch gekennzeichnet,**
**dass** bei simultan ausgesandten zyklisch verschobenen M-Sequenzen, Gold-Sequenzen bzw. Kasami-Sequenzen die quasi-orthogonale Eigenschaft der unterschiedlichen Codes auf den Autokorrelationseigenschaften der M-Sequenzen, Gold-Sequenzen bzw. Kasami-Sequenzen basiert.

6. Optoelektronischer Sensor nach einem der vorhergehenden Ansprüche,
**dadurch gekennzeichnet,**
**dass** die Mutter-Sequenz in zumindest zwei, insbesondere in zumindest drei und vorzugsweise in zwei bzw. drei bis sechs Code-Segmente aufgeteilt ist.

7. Optoelektronischer Sensor nach einem der vorhergehenden Ansprüche,
**dadurch gekennzeichnet,**
**dass** durch die zyklische Verschiebung der Code-Segmente der Mutter-Sequenz zumindest zwei, insbesondere drei und vorzugsweise zwei bzw. drei bis sechs unterschiedliche Codes erzeugt sind.

8. Optoelektronischer Sensor nach einem der vorhergehenden Ansprüche,
**dadurch gekennzeichnet,**
**dass** die unterschiedlichen Codes verschiedenen Lichtsendern (12) eines Lichtgitters zugeordnet sind.

9. Optoelektronischer Sensor nach einem der vorhergehenden Ansprüche,
**dadurch gekennzeichnet,**
**dass** die von den Lichtsendern (12) simultan in den Überwachungsbereich ausgesandten Lichtsignale jeweils durch ein nach dem DSSS (Direct Sequence Spread Spectrum)-Bandspreizverfahren mit dem betreffenden Code moduliertes Ausgangssignal erzeugt sind.

10. Optoelektronischer Sensor nach einem der vorhergehenden Ansprüche,
**dadurch gekennzeichnet,**
**dass** die von den Lichtsendern (12) simultan in den Überwachungsbereich ausgesandten Lichtsignale jeweils durch wenigstens einen mit dem betreffenden Code gemischten Lichtpuls erzeugt sind.

11. Optoelektronischer Sensor nach einem der vorhergehenden Ansprüche,
**dadurch gekennzeichnet,**
**dass** die von dem Lichtempfänger (18) insbesondere als Summen-signal empfangenen Lichtsignale zur Identifizierung des einem jeweiligen Lichtsender (12) zugeordneten Ausgangssignals mit dem dem betreffenden Lichtsender (12) zugeordneten Code beaufschlagt werden.

12. Optoelektronischer Sensor nach Anspruch 9,
**dadurch gekennzeichnet,**
**dass** die Steuer- und/oder Auswerteeinrichtung (20) Mittel (20') umfasst, um zur Identifizierung des einem jeweiligen Lichtsender (12) zugeordneten Ausgangssignals die Autokorrelationsfunktion zwischen den empfangenen Lichtsignalen bzw. Summensignal und dem betreffenden Code zu bilden.

13. Optoelektronischer Sensor nach einem der vorhergehenden Ansprüchen,
**dadurch gekennzeichnet,**
**dass** jeweils zumindest zwei Lichtsendern (12) ein gemeinsamer Lichtempfänger (18) zugeordnet ist.

14. Optoelektronischer Sensor nach einem der vorhergehenden Ansprüchen,
**dadurch gekennzeichnet,**
**dass** bei simultan ausgesandten quasi-orthogonalen Hadamard-Walsh-Codes die Synchronisation des Sensors über einzelne Pseudozufallssequenzen erfolgt.

15. Optoelektronischer Sensor nach einem der vorhergehenden Ansprüchen,
**dadurch gekennzeichnet,**

**dass** bei simultan ausgesandten zyklisch verschobenen M-Sequenzen, Gold-Sequenzen bzw. Kasami-Sequenzen die Synchronisation des Sensors über das vom zugeordneten gemeinsamen Lichtempfänger (18) empfangene Summensignal erfolgt.

**Claims**

1. An optoelectronic sensor having a plurality of light transmitters (12) for transmitting light signals into a monitored zone, at least one light receiver (18) for receiving light signals transmitted by the light transmitters and a control and/or evaluation device (20) for generating and/or influencing the light signals and for generating an object detection signal in the event of the presence of an object in the monitored zone in dependence on the output signals of the light receiver (18),
   **characterised in that**
   at least two light transmitters (12) are provided whose light signals simultaneously transmitted into the monitored zone are each generated by an output signal modulated by a code in accordance with the spread spectrum system, with the codes of different light transmitters (12) being generated by orthogonal Hadamard-Walsh codes or with a first code in the form of a pseudo-random code including an M sequence, a Gold sequence or a Kasami sequence being associated with a first light transmitter, said pseudo-random code forming a master sequence divided into a plurality of code segments and with a further code differing at least from the first code being associated with at least one further light transmitter (12), said further code being generated by a cyclic shifting of the code segments of the master sequence, with the different codes associated with the different light transmitters (12) again forming orthogonal codes.

2. An optoelectronic sensor in accordance with claim 1,
   **characterised in that**
   the control and/or evaluation device (20) is designed so that n different correlation spectra are evaluated at the reception side with n simultaneously transmitted codes.

3. An optoelectronic sensor in accordance with claim 2,
   **characterised in that**
   the control and/or evaluation device (20) is designed so that the n different correlation spectra are evaluated linked via the positions of the individual correlation peaks.

4. An optoelectronic sensor in accordance with any one of the preceding claims,
   **characterised in that**
   the control and/or evaluation device (20) is designed so that all codes can be identified at the reception side with only one evaluation procedure with simultaneously transmitted cyclically shifted M sequences, Gold sequences or Kasami sequences.

5. An optoelectronic sensor in accordance with any one of the preceding claims,
   **characterised in that**
   with simultaneously transmitted cyclically shifted M-sequences, Gold sequences or Kasami sequences, the quasi-orthogonal property of the different codes are based on the autocorrelation properties of the M sequences, Gold sequences or Kasami sequences.

6. An optoelectronic sensor in accordance with any one of the preceding claims,
   **characterised in that**
   the master sequence is divided into at least two, in particular into at least three, and preferably into two or three to six code segments.

7. An optoelectronic sensor in accordance with any one of the preceding claims,
   **characterised in that**
   at least two, in particular three, and preferably two or three to six different codes are generated by the cyclic shifting of the code segments of the master sequence.

8. An optoelectronic sensor in accordance with any one of the preceding claims,
   **characterised in that**
   the different codes are associated with different light transmitters (12) of a light grid.

**9.** An optoelectronic sensor in accordance with any one of the preceding claims,
**characterised in that**
the light signals transmitted simultaneously into the monitored zone by the light transmitters (12) are each generated by an output signal modulated using the respective code in accordance with the DSSS (direct sequence spread spectrum) process.

**10.** An optoelectronic sensor in accordance with any one of the preceding claims,
**characterised in that**
the light signals transmitted simultaneously into the monitored zone by the light transmitters (12) are each generated by at least one light pulse mixed with the respective code.

**11.** An optoelectronic sensor in accordance with any one of the preceding claims,
**characterised in that**
the light signals received by the light receiver (18), in particular received as a sum signal, are acted on by the code associated with the respective light transmitter (12) for identifying the output signal associated with a respective light transmitter (12).

**12.** An optoelectronic sensor in accordance with claim 9,
**characterised in that**
the control and evaluation device (20) includes means (20') to form the autocorrelation function between the received light signals or the sum signal and the respective code to identify the output signal associated with a respective light transmitter (12).

**13.** An optoelectronic sensor in accordance with any one of the preceding claims,
**characterised in that**
a common light receiver (18) is associated with a respective at least two light transmitters (12).

**14.** An optoelectronic sensor in accordance with any one of the preceding claims,
**characterised in that**
with simultaneously transmitted quasi-orthogonal Hadamard-Walsh codes, the synchronisation of the sensor takes place via individual pseudo-random sequences.

**15.** An optoelectronic sensor in accordance with any one of the preceding claims,
**characterised in that**
with simultaneously transmitted cyclically shifted M-sequences, Gold sequences or Kasami sequences, the synchronisation of the sensor takes place via the sum signal received by the associated common light receiver (18).

**Revendications**

**1.** Capteur optoélectronique comprenant plusieurs émetteurs de lumière (12) pour émettre des signaux lumineux dans une zone de surveillance, au moins un récepteur de lumière (18) pour recevoir des signaux lumineux émis par les émetteurs de lumière, et une unité de commande et/ou d'évaluation (20) pour engendrer et/ou influencer les signaux lumineux et pour engendrer un signal de constatation d'objet dans le cas de présence d'un objet dans la zone de surveillance, en fonction des signaux de sortie du récepteur de lumière (18),
**caractérisé en ce que**
il est prévu au moins deux émetteurs de lumière (12) dont les signaux lumineux, émis simultanément dans la zone de surveillance, sont engendrés chacun par un signal de sortie modulé avec un code selon le processus d'étalement de bande, tels que les codes de différents émetteurs de lumière (12) sont engendrés par des codes orthogonaux de Hadamard-Walsh, ou un premier code sous la forme d'un code pseudo-aléatoire qui comprend une séquence M, une séquence de Gold ou une séquence de Kasami, est associé à un premier émetteur de lumière, le code pseudo-aléatoire formant une séquence mère subdivisée en plusieurs segments de code, et un autre code, qui se distingue au moins du premier code, est associé à au moins un autre émetteur de lumière (12), ledit autre code étant engendré par un décalage cyclique des segments de code de la séquence mère, et les codes différents associés à différents émetteurs de lumière (12) forment à nouveau des codes orthogonaux.

**2.** Capteur optoélectronique selon la revendication 1,
**caractérisé en ce que** l'unité de commande et/ou d'évaluation (20) est réalisée de telle façon que pour n codes émis simultanément, n différents spectres de corrélation sont évalués du côté réception.

3. Capteur optoélectronique selon la revendication 2,
**caractérisé en ce que** l'unité de commande et/ou d'évaluation (20) est réalisée de telle façon que les n spectres de corrélation différents sont évalués de façon chaînée via les positions des pointes de corrélations individuelles.

4. Capteur optoélectronique selon l'une des revendications précédentes,
**caractérisé en ce que** l'unité de commande et/ou d'évaluation (20) est réalisée de telle façon que pour des séquences M, des séquences de Gold ou des séquences de Kasami émises simultanément et décalées de façon cyclique, la totalité des codes est identifiable du côté réception avec simplement une opération d'évaluation.

5. Capteur optoélectronique selon l'une des revendications précédentes,
**caractérisé en ce que** pour des séquences M, des séquences de Gold ou des séquences de Kasami émises simultanément et décalées de façon cyclique, la propriété quasi-orthogonale des codes différents est basée sur les propriétés d'autocorrélation des séquences M, des séquences de Gold ou des séquences de Kasami.

6. Capteur optoélectronique selon l'une des revendications précédentes,
**caractérisé en ce que** la séquence mère est subdivisée en au moins deux segments de code, en particulier en au moins trois et de préférence en deux ou trois à six segments de code.

7. Capteur optoélectronique selon l'une des revendications précédentes,
**caractérisé en ce que** par le décalage cyclique des segments de code de la séquence mère, au moins deux, en particulier trois et de préférence deux ou trois à six codes différents sont engendrés.

8. Capteur optoélectronique selon l'une des revendications précédentes,
**caractérisé en ce que** les codes différents sont associés à différents émetteurs de lumière (12) d'une barrière lumineuse.

9. Capteur optoélectronique selon l'une des revendications précédentes,
**caractérisé en ce que** les signaux lumineux émis par les émetteurs de lumière (12) simultanément vers la zone de surveillance sont engendrés chacun par un procédé d'étalement de bande dit DSSS (Direct Sequence Spread Spectrum, "spectre étalé à séquence directe") avec un signal de départ modulé au moyen du code concerné.

10. Capteur optoélectronique selon l'une des revendications précédentes,
**caractérisé en ce que** les signaux lumineux émis par les émetteurs de lumière (12) simultanément vers la zone de surveillance sont engendrés chacun par au moins une impulsion de lumière mélangée avec le code concerné.

11. Capteur optoélectronique selon l'une des revendications précédentes,
**caractérisé en ce que** les signaux lumineux reçus par le récepteur de lumière (18), en particulier sous forme de signaux de sommation, sont affectés, pour l'identification d'un signal de sortie associé au récepteur de lumière respective (12), du code associé à l'émetteur de lumière concerné (12).

12. Capteur optoélectronique selon la revendication 9,
**caractérisé en ce que** l'unité de commande et/ou d'évaluation (20) comprend des moyens (20') pour former la fonction d'autocorrélation entre les signaux lumineux reçus, ou les signaux de sommation, et le code concerné, pour l'identification du signal de sortie associé à un émetteur de lumière respectif (12).

13. Capteur optoélectronique selon l'une des revendications précédentes,
**caractérisé en ce qu'**un récepteur de lumière commun (18) est associé respectivement à au moins deux émetteurs de lumière (12).

14. Capteur optoélectronique selon l'une des revendications précédentes,
**caractérisé en ce que** pour des codes Hadamard-Walsh quasiorthogonaux émis simultanément, la synchronisation du capteur a lieu via des séquences pseudo-aléatoires individuelles.

15. Capteur optoélectronique selon l'une des revendications précédentes,
**caractérisé en ce que** pour des séquences M, des séquences de Gold ou des séquences de Kasami décalées cycliquement et émises simultanément, la synchronisation du capteur a lieu via le signal de sommation reçu par le récepteur de lumière (18) commun associé.

EP 2 103 962 B1

# Fig. 1

Code 1 $C_1[k]$ → DAC — 12 → $C_1(t)$

Code 2 $C_2[k]$ → DAC — 12 → $C_2(t)$

Code 3 $C_3[k]$ → DAC — 12 → $C_3(t)$

$S(t)$

Interferenz $I(t)$

$R_X(t)$

ADC — 18 → $R_X[k]$ → Auswertung — 20'

10  14  16  20

# Fig. 2

**Fig. 3**

**Fig. 4**

**Fig. 5**

**Fig. 6**

# Fig. 7

$C_{ref, 1}[k]$

xCorr

$S_1[m]$

Auswertung Code 1

$C_{ref, 2}[k]$

ADC

$R_X[k]$

xCorr

$S_2[m]$

Auswertung Code 2

$C_{ref, 3}[k]$

xCorr

$S_3[m]$

Auswertung Code 3

# Fig. 8

Evaluation Range

Peak — Valid Range

Peak of Correlation

Peak of Interference

Sidelobes

$S[m]$ / peak threshold

2

1.5

1

0.5

0

-0.5

-1

100    200    300    spectral midpoint    500    600    700    $m / t_{sample}$

# Fig. 9

# Fig. 10

# Fig.11

Peak-Position

# Fig. 12

# Fig. 13

# Fig. 14

EP 2 103 962 B1

a) Code 1 | S1 | S2 | S3 |

b) Code 1 | S1 | S2 | S3 |

Code 2 | S3 | S1 | S2 |

# Fig. 15

# Fig. 16

# Fig. 17

| Valid Range | Valid Range | Valid Range |
|:---:|:---:|:---:|
| $S_1[m]$ | $S_2[m]$ | $S_3[m]$ |
| Peak-Pos$_1$ | Peak-Pos$_2$ | Peak-Pos$_3$ |

# Fig. 18

| maximaler Peak im Bereich „Evaluation Range" ermitteln |
|---|

Peak-Pos ist innerhalb von Valid Range
&&
Peak-Pos aller Spektren gleich
&&
Peak >= Peak-Threshold

Nein — Ja

| PSR = 0 | maximaler Sidelobe im Bereich „Evaluation Range" ermitteln |
| | PSR berechnen |

# Fig. 19

a) Code 1 | 1 | 2 | 3 |

Interference* | 1 | 2 | 3 |

—— Korrelation von Code-Signal und Summen-Signal

b) Code 2 | 3 | 1 | 2 |

Interference* | 1 | 2 | 3 |

—*— Korrelation von Code-Signal und Interferenz

# Fig. 20

1) ■ False Acceptance + False Rejection    2) ▢ False Acceptance    3) ▦ False Rejection    4) ▨ Valid PSR-Threshold

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10046136 A1
- DE 19926214 A1

- US 20060017545 A1

**In der Beschreibung aufgeführte Nicht-Patentliteratur**

- **M: KAVEHRAD.** Optical Code-Division-Multiplexed Systems Based on Spectral Encoding of Noncoherent Sources. *JOURNAL OF LIGHTWAVE TECHNOLOGY,* Marz 1995, vol. 13 (3), 534-545